# EUROPÄISCHE PATENTANMELDUNG

(11) **EP 3 056 755 A1**
(43) Veröffentlichungstag der Anmeldung: **17.08.2016**
(21) Anmeldenummer: 16150722.3
(22) Anmeldetag: 11.01.2016
(51) Int. Cl.: F16D 59/00

(54) **MOMENTGESTEUERTE BREMSEINRICHTUNG FÜR ANGETRIEBENE WERKZEUGE**

(30) Priorität: 30.01.2015 DE 202015000702 U
(71) Anmelder: SOLO Kleinmotoren GmbH, 71050 Sindelfingen (DE)
(72) Erfinder: SCHINKEL, Samuel, 71263 Weil der Stadt (DE)
(74) Vertreter: DREISS Patentanwälte PartG mbB

(57) **Zusammenfassung**

Die Erfindung betrifft eine Bremseinrichtung für ein angetriebenes Werkzeug umfassend eine Welle, eine feststehende Bremstrommel, ein Antriebselement, einen mit der Welle drehfest verbundenen Bremsbackenhalter, wobei an dem Bremsbackenhalter mindestens eine Bremsbacke schwenkbar angeordnet ist und wobei die Bremsbacke aktiviert wird, wenn Leistung bzw. Drehmoment von der Welle auf das Antriebselement übertragen wird.

## Beschreibung

Angetriebene Werkzeuge, wie zum Beispiel Trennschleifer, Freischneider Kreissägen und anderes mehr, haben eine sehr hohe Leistungsfähigkeit unter anderem wegen der hohen Schnittgeschwindigkeiten. Insbesondere die rotierenden oder umlaufenden Werkzeuge haben beim Auslauf, aufgrund ihrer Massenträgheit und der hohen Betriebsdrehzahlen ein erhebliches Gefährdungspotential. Angetriebene Werkzeuge im Sinne der Erfindung sind sowohl handgeführte Werkzeuge als auch stationäre Werkzeuge, wie zum Beispiel eine Tischkreissäge.

Als "Auslauf" wird im Zusammenhang mit der Erfindung der Zustand bezeichnet, der unmittelbar auf den normalen Betriebszustand folgt. Der Betriebszustand ist dadurch gekennzeichnet, dass Leistung vom Antriebsmotor auf das Werkzeug übertragen wird und das Werkzeug seine Nenn- oder Arbeitsdrehzahl erreicht hat. Wenn - ausgehend vom Betriebszustand - der Antriebsmotor in den Leerlauf gebracht wird oder abgeschaltet wird, dann wird keine Leistung mehr vom Antriebsmotor auf das Werkzeug übertragen und das Werkzeug dreht sich aufgrund seines Massenträgheitsmoments weiter; es "läuft aus".

Weil Trennschleifer Arbeitsdrehzahlen von 10.000 Umdrehungen pro Minute und mehr haben, würde ein ungebremstes Auslaufen der Trennscheibe sehr lange dauern und solange die Trennscheibe sich dreht, kann sie Verletzungen hervorrufen oder ungewollt Gegenstände, die mit der drehenden Trennscheibe in Kontakt kommen beschädigen oder sogar zerstören. Daher ist es unter anderem aus Gründen der Arbeitssicherheit und -effizienz erforderlich, das Werkzeug unmittelbar nach dem Abschalten des Antriebsmotors bzw. unmittelbar nach dem der Antriebsmotor in den Leerlauf gebracht wurde, aktiv abzubremsen mit dem Ziel das Werkzeug möglichst innerhalb von ein bis zwei Sekunden zum Stillstand zu bringen.

Aus DE 20 2009 005 935 U1 und WO 2008/103079 A1 sind Bremseinrichtungen bekannt, die mit Hilfe von Fliehgewichten ein- bzw. ausgeschaltet werden.

Ein Nachteil dieser Bremseinrichtungen besteht darin, dass der Einschaltpunkt der fliehkraftgesteuerten Bremsen unterhalb der Arbeitsdrehzahl des Arbeitswerkzeugs ausgelegt werden muss, um eine Bremswirkung während der Arbeit mit dem Arbeitsgerät zu vermeiden. Daher wirkt die Bremseinrichtung aufgrund der Schaltung durch die Fliehgewichte erst unterhalb einer bestimmten Drehzahl, welche deutlich niedriger ist als die maximale Drehzahl des Arbeitswerkzeuges. Dadurch kann mittels dieser Bremsen nur unzureichend Einfluss auf die gesamte Bremszeit (von der Maximaldrehzahl bis zum Stillstand) genommen werden.

Ein weiterer Nachteil besteht darin, dass diese Bremsvorrichtungen eine bestimmte Mindestdrehzahl benötigen um die Bremswirkung zu deaktivieren. Dadurch wird die Zeit verlängert, die benötigt wird, um den Antriebsmotor von der Leerlaufdrehzahl auf die Nenndrehzahl zu beschleunigen.

Ein weiterer Nachteil besteht darin, dass der Betrag des Bremsmoments von der Drehzahl abhängig ist.

Der Erfindung liegt die Aufgabe zugrunde eine Bremseinrichtung für angetriebene Werkzeuge bereitzustellen, welche die Nachteile des Standes der Technik vermeidet, kompakt baut, kostengünstig herstellbar ist und idealerweise an in Serie gefertigten Werkzeugen nachgerüstet werden kann. Last but not least soll die erfindungsgemäße Bremseinrichtung leistungsfähig und sicher sein.

Diese Aufgabe wird erfindungsgemäß gelöst durch eine Bremseinrichtung mit den Merkmalen des Patentanspruchs 1.

Die erfindungsgemäße Bremseinrichtung wird aktiviert, sobald der Leistungsfluss vom Antriebsmotor zum Werkzeug unterbrochen wird. Dadurch wird die Bremszeit des Werkzeugs von der Betriebsdrehzahl bis zum Stillstand deutlich verkürzt, unter anderem weil die erfindungsgemäße Bremseinrichtung nahezu über das gesamte Drehzahlband des Arbeitswerkzeugs arbeitet. Alternativ zu dem im Detail erläuterten Kniehebel kann die erfindungsgemäße Steuerung der Bremse auch mittels eines Kurvengetriebes, insbesondere einer Kulissenführung oder Rampe möglich.

Sobald Leistung vom Antriebsmotor auf das Werkzeug übertragen wird, wird die erfindungsgemäße Bremseinrichtung ohne zeitliche Verzögerung deaktiviert und der Antriebsmotor kann das Werkzeug ungebremst beschleunigen.

Ein weiterer Vorteil der erfindungsgemäßen Bremseinrichtung ist darin zu sehen, dass sie nicht über Seilzüge, Gestänge oder Ähnliches betätigt wird. Dadurch ist die Einbindung in den Antriebsstrang eines Werkzeugs einfacher. Die Zahl der benötigten Bauteile sinkt und, weil externe Betätigungselemente immer eine potentielle Quelle von Störungen darstellen, ist die erfindungsgemäße Bremseinrichtung sehr robust und langlebig.

Durch die sehr kompakte Bauweise ohne externe Stellelemente ist es häufig sogar möglich, die erfindungsgemäße Bremseinrichtung an bereits in Serie gefertigten Werkzeugen nachzurüsten oder als Option anzubieten. Das eigentliche Werkzeug muss dazu nicht oder nur in sehr geringem Umfang geändert werden, was ebenfalls große wirtschaftliche Vorteile mit sich bringt.

In einer weiteren vorteilhaften Ausgestaltung der Erfindung ist an dem Bremsbackenhalter ein Anschlag ausgebildet, der den Weg des Kniehebels begrenzt und zur formschlüssigen Drehmomentübertragung von dem Antriebselement auf die Welle dient.

Dies bedeutet, dass wenn der Leistungsschluss vom Motor zum Werkzeug geht, eine starre Verbindung zwischen Antriebselement und dem Werkzeug besteht, so dass auch hohe Antriebsleistungen verlustfrei übertragen werden können. Die formschlüssige Kraftübertragung erfolgt vom Antriebselement über den Kniehebel, der an dem Anschlag des Bremsbackenhalters anliegt. Weil der Bremsbackenhalter erfindungsgemäß drehfest mit der Welle verbunden ist und das Werkzeug wiederum drehfest mit der Welle verbunden ist, ist somit ein Leistungsfluss vom Antriebselement zum Werkzeug immer dann gewährleistet, wenn der Antriebsmotor das Werkzeug antreibt.

Je nachdem wie der Anschlag an dem Bremsbackenhalter relativ zu dem Totpunkt des Kniehebels positioniert wird, kann das zum Aktivieren der Bremseinrichtung erforderliche Drehmoment konstruktiv in weiten Bereichen festgelegt werden. Dies ist ein weiterer großer Vorteil der erfindungsgemäßen Bremseinrichtung. Sie kann dadurch an verschiedenste Werkzeuge, mit unterschiedlichen Massenträgheitsmomenten und Arbeitsdrehzahlen auf einfache Weise angepasst werden.

Um Bauraum, vor allem in axialer Richtung einzusparen kann es vorteilhaft sein, das Antriebselement auf einer in der Regel zylindrischen Lagerfläche des Bremsbackenhalters drehbar zu lagern. Alternativ ist es selbstverständlich auch möglich, das Antriebselement separat zu lagern; zum Beispiel axial versetzt zu der Welle bzw. dem Bremsbackenhalter. Dadurch kann der Bauraum in axialer Richtung minimiert werden; allerding nimmt die Baulänge zu. Hier ist für jeden Anwendungsfall abzuwägen, welcher konstruktiven Variante der Vorzug gegeben wird.

Um die Anpresskraft, mit der die Bremsbacken bei aktivierter Bremseinrichtung gegen die Bremstrommel gedrückt werden, einstellen zu können und unabhängig von der Drehzahl der Welle zu machen, ist vorgesehen, zwischen dem Bremsbackenhalter und den Bremsbacken eine Feder anzuordnen. Diese Feder wird, in der Regel eine Druckfeder sein. Die Federkraft dieser Feder versucht, die Bremsbacke nach außen in Richtung der Bremstrommel zu drücken, wenn die Bremstrommel eine Bremsfläche aufweist, die als Innenzylinder ausgebildet ist.

Wenn die Bremstrommel eine Bremsfläche aufweist, die als Außenzylinder ausgebildet ist, dann muss die Bremsbacke entgegen der Fliehkraft von der oder den Federn von außen an die Bremstrommel gedrückt werden. Dies kann dann beispielsweise durch Zugfedern und/oder entsprechend gestaltete und vorgespannte Blattfedern erfolgen. Grundsätzlich ist es möglich, jede Art von Feder zu verwenden.

Es ist bei der erfindungsgemäßen Bremseinrichtung möglich, durch Fliehgewichte bzw. die Massenverteilung der Bremsbacke die Anpresskraft mit der die Bremsbacke gegen die Bremstrommel gedrückt wird konstruktiv einzustellen. Wenn die Bremsbacke von innen nach außen gegen eine Bremstrommel mit einer Bremsfläche, die als Innenzylinder ausgebildet ist, wirkt, dann verstärkt die auf die Bremsbacken wirkende Fliehkraft die Anpresskraft. Dann ist die Bremswirkung bei hohen Drehzahlen des Werkzeugs besonders hoch und nimmt mit sinkender Drehzahl des Werkzeugs ab. Dieser Verlauf der Anpresskraft in Abhängigkeit von der Drehzahl ist in sehr vielen Fällen erwünscht, weil bei hohen Drehzahlen die kinetische Energie des Antriebswerkzeugs sehr groß ist und daher eine große Bremsleistung erwünscht ist.

Wenn jedoch gewissermaßen als Gegengewicht zu der Masse der eigenen Bremsbacken auf der anderen Seite des Drehpunkts der Bremsbacke ein Fliehgewicht vorgesehen wird, dann kann der Effekt der Fliehkraft auf die Anpresskraft der Bremsbacke ganz oder teilweise ausgeglichen werden. Es ist auch möglich durch die Fliehgewichte, eine mit abnehmender Drehzahl zunehmende Anpresskraft der Bremsbacke konstruktiv vorzugeben.

Weitere Vorteile der erfindungsgemäßen Bremseinrichtung werden nachfolgend anhand der Zeichnung veranschaulicht und beschrieben.

### Zeichnung:

Es zeigen:
- Fig. 1:: Eine Seitenansicht eines Ausführungsbeispiels einer erfindungsgemäßen Bremseinrichtung,
- Fig. 2:: ein Längsschnitt entlang der Linie A-A in Fig. 3,
- Fig. 3:: eine Schnittdarstellung entlang der Linie B-B in Fig. 2,
- Fig. 4:: die Darstellung gemäß Fig. 3 mit aktiver Bremseinrichtung,
- Fig. 5:: die Darstellung gemäß Fig. 3 mit deaktivierter Bremseinrichtung,
- Fig. 6:: ein erfindungsgemäßer Bremsbackenhalter,
- Fig. 7:: ein erfindungsgemäßer Kniehebel,
- Fig. 8:: eine erfindungsgemäße Bremsbacke und
- Fig. 9:: eine erfindungsgemäße Bremsbacke mit Fliehgewicht

### Beschreibung des Ausführungsbeispiels

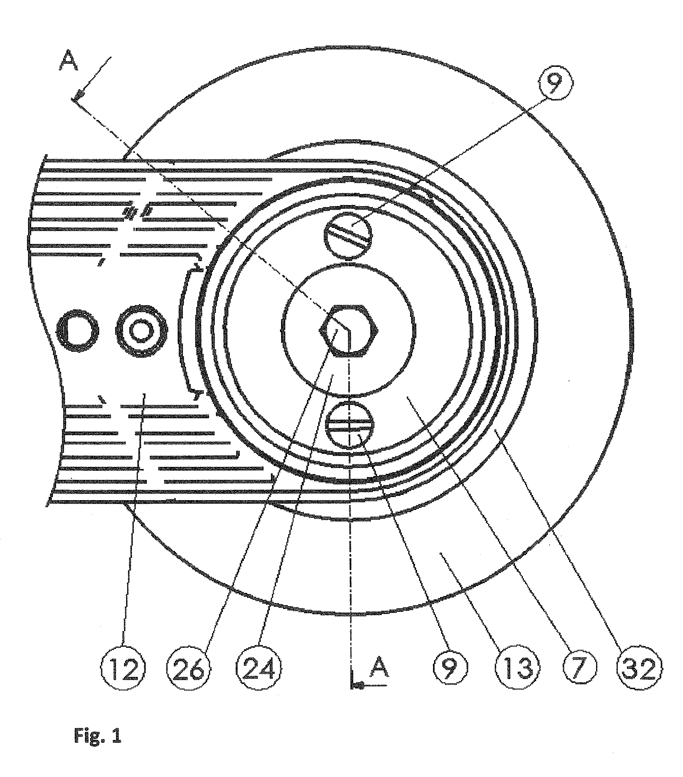

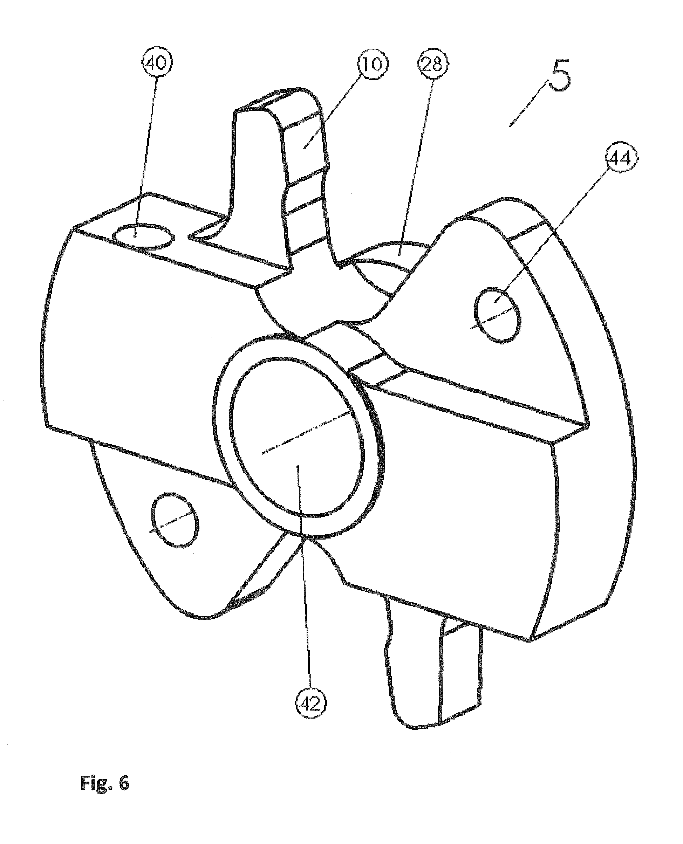

In den Figuren 1 bis 5 wird ein Ausführungsbeispiel einer erfindungsgemäßen Bremseinrichtung in verschiedenen Ansichten in zusammengebauten Zustand dargestellt, während die Figuren 6 bis 9 wie Einzelteile der erfindungsgemäßen Bremseinrichtung, nämlich einen Bremsbackenhalter, einen Kniehebel und eine Bremsbacke einzeln darstellen.

Zunächst ist in der Figur 1 eine Seitenansicht der erfindungsgemäßen Bremseinrichtung dargestellt. In dieser Seitenansicht ist ein Antriebselement 7 sichtbar, das beispielsweise eine Riemenscheibe oder ein Zahnrad sein kann. Im vorliegenden Fall ist es eine Riemenscheibe; die Erfindung ist jedoch darauf nicht beschränkt.

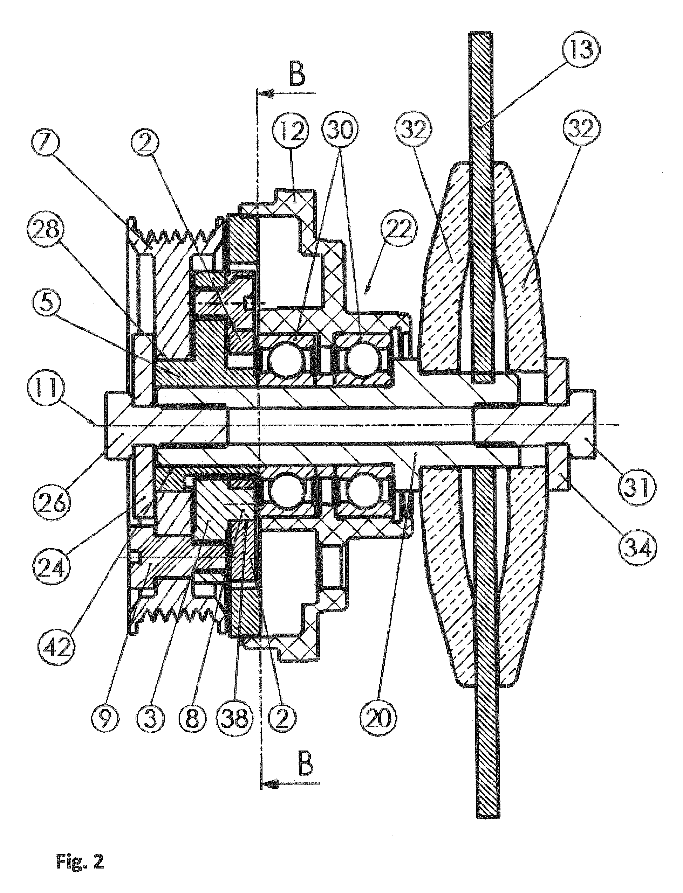

Das Antriebselement 7 ist mittelbar auf einer Welle 20 (siehe Figur 2) drehbar gelagert. Die eigentliche Lagerung des Antriebselements 7 auf einer zylindrischen Lagerfläche 28 eines Bremsbackenhalters 5 ist in der Figur 1 nicht sichtbar. Das Antriebselement 7 wird in axialer Richtung von einer Scheibe 24 gehalten, die wiederum mittels einer zentralen Schraube 26 mit der Welle 20 verbunden ist. Die Scheibe 24 verhindert, dass das Antriebselement in axialer Richtung von der Welle 20 rutscht. Mit 13 ist ein Werkzeug, wie zum Beispiel eine Trennscheibe, versehen. Das Bezugszeichen 32 bezeichnet einen Spannflansch.

In dem Antriebselement 7 sind zwei Lagerbolzen 9 eingeschraubt, die als Lagerpunkte für zwei Kniehebel 3 (nicht sichtbar) in der Figur 1 dienen.

In der Figur 2 ist ein Längsschnitt durch die erfindungsgemäße Bremseinrichtung entlang der Linie A-A in Figur 1 dargestellt. Gleiche Bauteile werden mit gleichen Bezugszeichen versehen. Mit dem Bezugszeichen 12 ist eine Halterung bzw. ein Lagerbock für die Lagerung 22 der Welle 20 bezeichnet. In anderen Worten, diese Halterung 12 rotiert nicht. Die Lagerung 22 der Welle 20 ist in dem dargestellten Ausführungsbeispiel mit Hilfe von zwei Wälzlagern 30 realisiert. Zwischen den Wälzlagern 30 ist an der Halterung 12 ein Absatz ausgebildet, so dass die Außenringe der Lager 30 sich in axialer Richtung nicht relativ zu der Halterung 12 verschieben können. Eventuell vorhandene Sicherungsscheiben (Seeger-Ringe) und/oder Wellendichtringe sind nicht dargestellt.

An dem in Figur 2 rechten Ende der Welle 20 ist ein Werkzeug, beispielsweise eine Diamantschleifscheibe zwischen zwei Spannflanschen 32 geklemmt und wird dadurch mit der Welle 20 drehfest verbunden. Die Befestigung des Werkzeugs 13 auf der Welle 20 ist dem Fachmann auf dem Gebiet von angetriebenen Werkzeugen, insbesondere auf dem Gebiet von Trennschleifern, wohl vertraut, so dass auf eine detaillierte Beschreibung verzichtet werden kann. Zwischen der (Klemm-)Schraube 31 und dem in Figur 2 rechten Spannflansch 32 ist eine Scheibe 34 vorgesehen.

Die in Figur 2 linke Spannflansch 32 stützt sich gegen einen Absatz (ohne Bezugszeichen) der Welle 20 in axialer Richtung ab, der somit das Widerlager für die von der Schraube 31 ausgeübte Axialkraft darstellt. Mit dieser Axialkraft wird das Werkzeug 13 zwischen den Spannflanschen 32 geklemmt.

Der Absatz links der linken Spannflansch 32 der Welle 20 fixiert gleichzeitig den Innenring des einen Wälzlagers 30 in axialer Richtung. Somit stellt das rechte Lager 30 in der Figur 2 das Festlager dar und das linke Wälzlager 30 ist das Loslager.

Links von dem linken Lager 30 ist ein Bremsbackenhalter 5 auf der Welle 20 aufgeschoben. Der Bremsbackenhalter 5 wird über die Scheibe 24 und die Schraube 26 in axialer Richtung mit dem Innenring des linken Lagers 30 verspannt. Der Bremsbackenhalter 5 ist drehfest mit der Welle 20 verbunden.

Die konstruktive Ausgestaltung des Bremsbackenhalters 5 wird nachfolgend noch im Detail erläutert. Zunächst ist jedoch von Bedeutung, dass der Bremsbackenhalter 5 eine zylindrische Lagerfläche 28 aufweist. Diese zylindrische Lagerfläche 28 nimmt das Antriebselement 7 auf, so dass das Antriebselement 7 drehbar auf der zylindrischen Lagerfläche 28 gelagert ist. Das Antriebselement 7 kann sich relativ zu dem Bremsbackenhalter 5 und damit auch relativ zu der Welle 20 und dem darauf befestigten Werkzeug 13 drehen.

An der Halterung 12 ist eine Bremstrommel 1 fest angeordnet. An dem Antriebselement 7 sind mit Hilfe der Lagerbolzen 9 zwei Kniehebel 3 schwenkbar befestigt. An dem radial inneren Ende der Kniehebel 3 ist ein Zapfen 8 ausgebildet, der wiederum in eine entsprechende Bohrung der Bremsbacke 2 eingreift. Diese Bohrung hat das Bezugszeichen 38.

In der Figur 6 ist ein erfindungsgemäßer Bremsbackenhalter 5 in einer Isometrie dargestellt. Der Bremsbackenhalter 5 hat an dem in Figur 6 hinteren Ende die bereits erwähnte zylindrische Lagerfläche 28, die zur Lagerung des Antriebselements 7 dient. Auf der dem Betrachter zugewandten Seite des Bremsbackenhalters 5 ist eine Aufnahme 40 für eine Druckfeder ausgebildet.

Im Zentrum des Bremsbackenhalters 5 ist eine Durchgangsbohrung 42 ausgebildet mit der der Bremsbackenhalter 5 auf die Welle 20 aufgeschoben wird. In axialer Richtung zwischen der Aufnahme 40 und der Lagerfläche 28 sind ein Anschlag 10 und eine Lagerbohrung 44 an dem Bremsbackenhalter 5 ausgebildet.

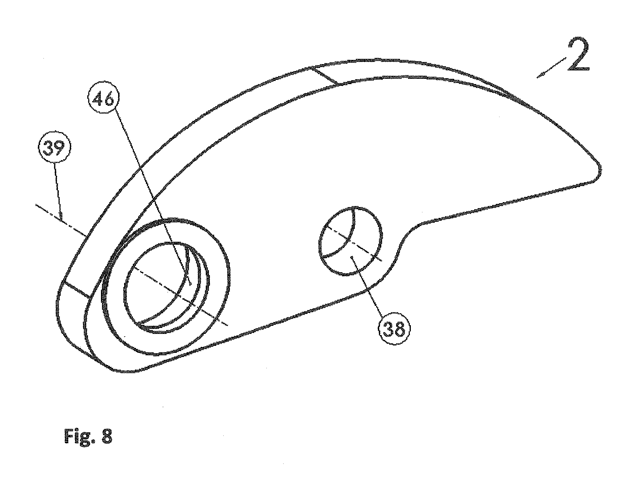

In der Figur 8 ist eine erfindungsgemäße Bremsbacke 2 dargestellt. Die erfindungsgemäße Bremsbacke 2 weist eine Bohrung 38 auf, die zur Aufnahme des Zapfens 8 am radial inneren Ende des Kniehebels 3 dient. Diese Bohrung 38 ist etwa in der Mitte der Bremsbacke 2 angeordnet. An dem in Figur 8 linken Ende der Bremsbacke 2 ist eine Lagerbohrung 46 ausgebildet. Mit Hilfe eines nicht dargestellten Zapfens wird die Bremsbacke 2 drehbar an dem Bremsbackenhalter 5 im Bereich der Bohrung 44 gelagert.

Da die Drehbewegung der Bremsbacke 2 relativ zum Bremsbackenhalter 5 nur einen kleinen Winkelbereich umfasst, wird sie auch als Schwenkbewegung bezeichnet. Mit anderen Worten: Die Bremsbacke 2 ist schwenkbar an dem Bremsbackenhalter 5 befestigt. Drehpunkt dieser Schwenkbewegung ist die Mittelachse der Bohrung 44 bzw. 46.

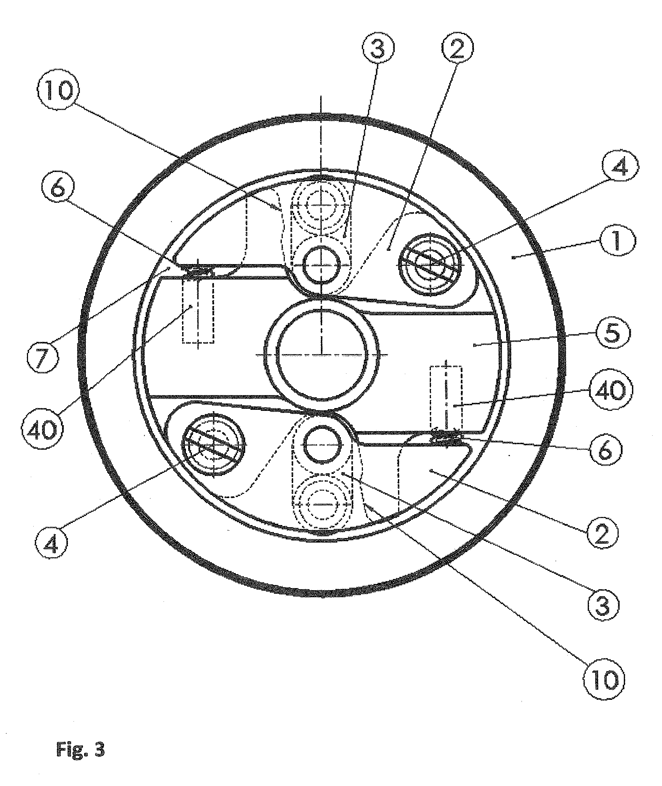

In der Figur 3 ist ein Schnitt durch die erfindungsgemäße Bremseinrichtung entlang der Linie B-B gemäß Figur 2 dargestellt, so dass die Lagerung der Bremsbacken 2 an den Bremsbackenhalter 5 deutlich wird.

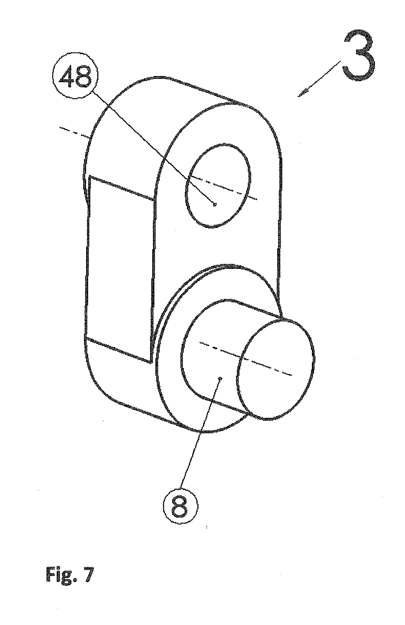

In der Figur 7 ist ein erfindungsgemäßer Kniehebel dargestellt. Er hat an seinem einen Ende den bereits mehrfach erwähnten Zapfen 8, der in die Bohrung 38 der Bremsbacke eingeführt wird. An dem in Figur 7 oberen Ende ist ein Innengewinde 48 vorhanden, in welches der Lagerbolzen 9 (siehe Fig. 2 und Fig. 1) eingedreht wird.

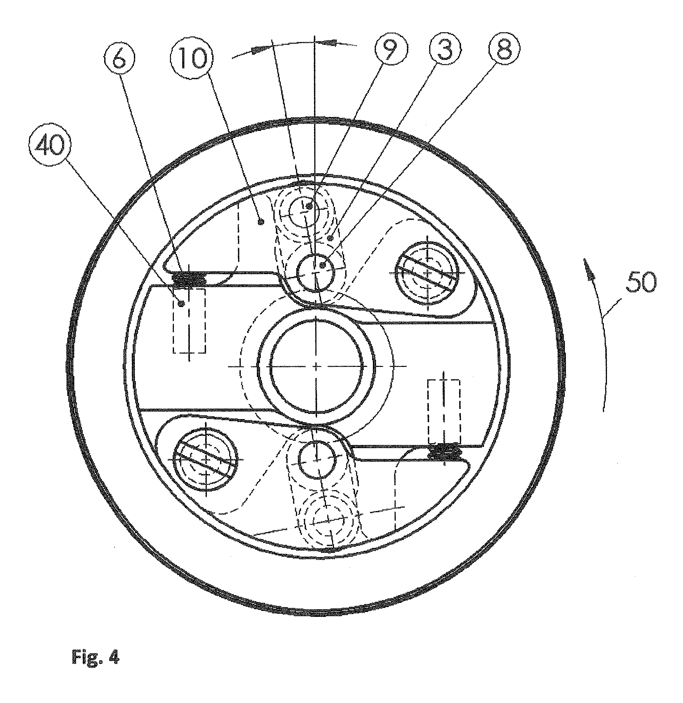

Der Anschlag 10 des Bremsbackenhalters 5 (siehe Figur 6) dient dazu, den Weg des Kniehebels 3 in Antriebsrichtung zu begrenzen. Antriebsrichtung bedeutet, dass das Antriebselement 7 Leistung auf das Werkzeug 13 in der bestimmungsgemäßen Drehrichtung (siehe den Pfeil 50 in Figur 4) überträgt.

In den Figuren 3, 4 und 5 sind Schnitte entlang der Linie B-B in der Figur 2 in verschiedenen Schaltstellungen der Bremse dargestellt.

Aus diesen Darstellungen wird deutlich, wie die Bremsbacken 2 mit Hilfe von Lagerbolzen 4 an dem Bremsbackenhalter 5 schwenkbar befestigt sind.

Des Weiteren ist gut zu erkennen, dass in den Aufnahmen 40 des Bremsbackenhalters 5 jeweils eine Druckfeder 6 angeordnet ist, die bestrebt ist, die Bremsbacke 2 radial nach außen gegen die Bremstrommel 1 zu pressen. Anstelle einer als Spiralfeder gewickelten Druckfeder 6, können auch andere Bauarten von Federn, seien es Zugfedern mit einer entsprechenden Umlenkung oder Blattfedern, Tellerfedern und anderes mehr, eingesetzt werden. Es ist auch ausreichend, nur eine Feder einzusetzen.

Die Federn 6 bewirken eine drehzahlunabhängige (Anpress-)Kraft mit der die Bremsbacken 2 gegen die Bremstrommel 1 gepresst werden. Selbstverständlich können dabei noch Fliehkräfte unterstützend und drehzahlabhängig wirksam werden.

In der Figur 3 ist der Kniehebel 3 in einer Position dargestellt, in der die Mittelpunkte des Lagerbolzens 9 und des Zapfens 8 radial ausgerichtet sind, so dass sich der Kniehebel 3 in einem Totpunkt befindet.

Der Kniehebel 3 ist, wie bereits erwähnt, mit dem Lagerbolzen 9 an dem Antriebselement 7 befestigt und somit in seiner radialen Ausrichtung an diesem Punkt fixiert. An dem radial inneren Ende des Kniehebels 3 greift dieser mit seinem Zapfen 8 in die Bohrung 38 der Bremsbacke 2 ein und nimmt die von der Feder 6 radial nach außen wirkende Kraft auf. Infolge dessen berührt die Bremsbacke 2 bei der dargestellten Position des Kniehebels 3 die Bremstrommel 1 nicht; die Bremseinrichtung ist deaktiviert.

In der Figur 4 ist nun der Zustand der erfindungsgemäßen Bremseinrichtung dargestellt, in der Leistung von dem Antriebselement 7 auf das Werkzeug 13 übertragen wird. Die Drehrichtung ist in der Figur 4 durch einen gekrümmten Pfeil 50 angedeutet. In diesem Fall dreht das Antriebselement 7 den Lagerbolzen 9 und mit ihm den Kniehebel 3 entgegen dem Uhrzeigersinn, wie dies durch den gekrümmten Pfeil 50 angedeutet ist. Infolge dessen kommt der Kniehebel 3 in Anlage an den Anschlag 10 des Bremsbackenhalters 5 und wegen des dadurch entstehenden Formschlusses zwischen Kniehebel 3 und Bremsbackenhalter 5 wird der Bremsbackenhalter 5 in Drehung ebenfalls entgegen dem Uhrzeigersinn versetzt. Weil der Bremsbackenhalter 5 drehfest mit der Welle 20 verbunden ist, wird damit auch das Werkzeug 13 angetrieben.

In dieser Position verhindert der Kniehebel 3, dass die Bremsbacken 2 in Anlage an die Bremstrommel 1 kommen.

Wenn nun der Motor, welcher das Antriebselement 7 antreibt, abgeschaltet oder in Leerlauf versetzt wird, dann wird das Antriebselement 7 vom Motor abgebremst und aufgrund der Massenträgheit des Werkzeugs 13, der Spannflanschen 32, Welle 20 und des Bremsbackenhalters 5 dreht sich die Welle 20 und mit ihr der Bremsbackenhalter 5 schneller als das Antriebselement.

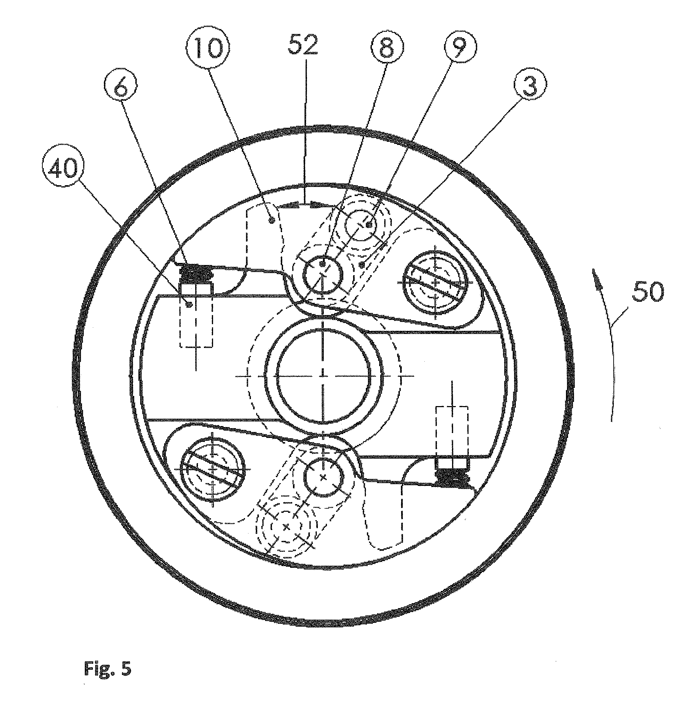

Dies führt dazu, dass der Kniehebel 3 nicht mehr an dem Anschlag 10 anliegt, sondern sich relativ zum Anschlag 10 im Uhrzeigersinn von diesem entfernt. Diese Situation ist in der Figur 5 dargestellt. Der Abstand zwischen dem Anschlag 10 und dem Kniehebel ist durch einen Doppelpfeil 52 angedeutet.

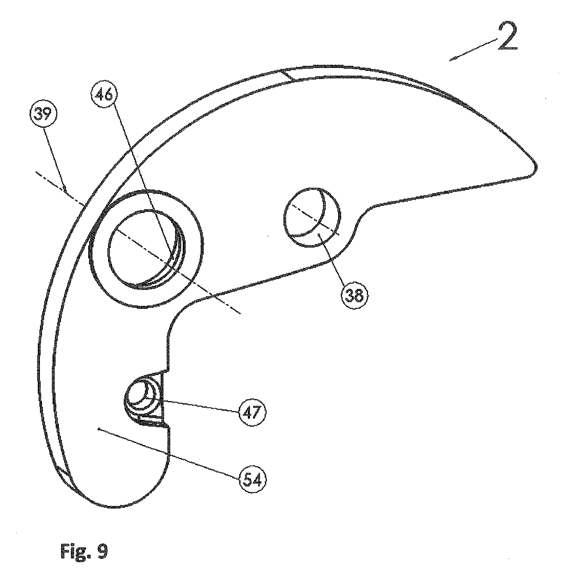

Der Abstand kommt, wie bereits erwähnt, dadurch zustande, weil sich der Bremsbackenhalter 5 und mit ihm das Werkzeug 3 schneller gedreht hat, als das Antriebselement und der am Antriebselement befestigten Kniehebel 3. Sobald der Kniehebel 3 den Totpunkt (siehe Figur 4) überschritten hat, kann die Feder die Bremsbacke 2 gegen die Bremstrommel 1 drücken; die Bremseinrichtung ist aktiviert. Die Anpresskraft kann anteilig oder vollständig mit Hilfe von einer oder mehreren Federn 6 bewirkt werden. Im ausgeführten Beispiel sind die Federn 6 als Druckfedern ausgeführt. Eine andere Möglichkeit wäre die Bremsbacken 2 auf der anderen Seite der Drehachse 4 zu verlängern (siehe Figur 9), um mittels Zugfedern die Anpresskraft zu erzeugen. Weiterhin ist denkbar die Bremsbacken 2 mittels Blattfedern nach außen oder innen zu drücken. Die Art der Feder wird nach Ort der Anbringung und/oder nach Bremstrommel mit innenliegender oder außenliegender Bremsfläche ausgewählt.

Durch die auf die Bremsbacke 2 wirkenden Fliehkräfte wird vor allem bei hohen Drehzahlen die von der Feder 6 aufgebrachte Bremskraft noch verstärkt. Dieser drehzahlabhängige Selbstverstärkungseffekt kann durch eine geeignete Massenverteilung der Bremsbacke und das Eigengewicht der Bremsbacke konstruktiv festgelegt und auf den speziellen Einsatz angepasst werden.

Es ist jedoch auch möglich, die Bremsbacke gewissermaßen als Winkelhebel auszubilden, wie dies in der Figur 9 angedeutet ist. Dadurch ist es möglich, dass sich die auf die Bremsbacke 2 wirkenden Fliehkräfte relativ zu dem Drehpunkt im Bereich der Bohrung 46 ganz oder teilweise auszugleichen, so dass die Bremskraft bzw. die Anpresskraft mit der die Bremsbacke 2 gegen die Bremstrommel 1 gedrückt wird, mehr oder weniger drehzahlabhängig ist.

Auch ist es zweckmäßig den Drehpunkt (4) der Bremsbacken so zu positionieren, dass eine Selbstverstärkung der Anpresskraft ausgenutzt werden kann. Dies ist zweckmäßig, wenn das Arbeitswerkzeug nur in einer Drehrichtung betrieben wird.

Um das Bremsmoment weiter zu erhöhen, können die Bremsbacken 2 so gestaltet werden, dass sie wie Fliehgewichte wirken und damit die Anpresskraft insbesondere bei hohen Drehzahlen steigern. Das dadurch erreichte drehzahlabhängige Bremsmoment kann über Gegenfliehgewichte auf der anderen Seite des Bremsbackendrehpunkts 4 der Bremsbacken 2 konstruktiv begrenzt werden (siehe Figur 9). Das durch Fliehkraft erzeugte Bremsmoment kann damit erfindungsgemäß beliebig positiv, neutral oder negativ ausgelegt werden.

Es ist auch möglich, in der Bohrung 47 eine Feder einzuhängen, um die Anpresskraft der Bremsbacken 2 zu erhöhen.

## Patentansprüche

1. Bremseinrichtung für ein angetriebenes Werkzeug umfassend eine Welle (20), eine feststehende Bremstrommel (1), ein Antriebselement (7), einen mit der Welle (20) drehfest verbundenen Bremsbackenhalter (5), wobei an dem Bremsbackenhalter (5) mindestens eine Bremsbacke (2) schwenkbar angeordnet ist und wobei die Bremsbacke (2) aktiviert wird, wenn Leistung bzw. Drehmoment von der Welle (20) auf das Antriebselement (7) übertragen wird.

2. Bremseinrichtung nach Anspruch 1, **dadurch gekennzeichnet**, an dem Bremsbackenhalter (5) mindestens eine Bremsbacke (2) schwenkbar angeordnet ist und wobei zwischen dem Antriebselement (7) und mindestens einer Bremsbacke (2) ein Kniehebel (3), ein Kurvengetriebe, insbesondere eine Kulissenführung oder eine Rampe, angeordnet ist.

3. Bremseinrichtung nach Anspruch 2, **dadurch gekennzeichnet, dass** an dem Bremsbackenhalter (5) ein Anschlag (10) ausgebildet ist, der den Weg des Kniehebels (3), des Kurvengetriebes, der Kulissenführung oder der Rampe begrenzt und zur formschlüssigen Drehmomentübertragung von dem Antriebselement (7) auf die Welle (20) dient.

4. Bremseinrichtung nach Anspruch 2 oder 3, **dadurch gekennzeichnet, dass** das Antriebselement (7) auf einer Lagerfläche (28) des Bremsbackenhalters (5) drehbar gelagert ist.

5. Bremseinrichtung nach einem der vorhergehenden Ansprüche, **dadurch gekennzeichnet, dass** zwischen Bremsbackenhalter (5) und der mindestens einen Bremsbacke (2) mindestens eine Feder (6) angeordnet ist, und dass die Feder (6) mindestens eine Bremsbacke (2) in Richtung der Bremstrommel (1) drückt.

6. Bremseinrichtung nach einem der vorhergehenden Ansprüche, **dadurch gekennzeichnet, dass** die Feder (6) als Druckfeder, Zugfeder, Schenkelfeder, Spiralfeder, Blattfeder oder Tellerfeder ausgebildet ist.

7. Bremseinrichtung nach einem der vorhergehenden Ansprüche, **dadurch gekennzeichnet, dass** die Drehpunkte der Bremsbacken (2) so positioniert sind, dass die Bremsbacken (2) selbstverstärkend sind.

8. Bremseinrichtung nach einem der vorhergehenden Ansprüche, **dadurch gekennzeichnet, dass** die Bremsbacken (2) Fliehgewichte (54) aufweisen.
